(19) Europäisches Patentamt
European Patent Office
Office européen des brevets

(11) **EP 3 220 133 B1**

(12) **EUROPEAN PATENT SPECIFICATION**

(45) Date of publication and mention
of the grant of the patent:
**01.04.2020   Bulletin 2020/14**

(51) Int Cl.:
***G01N 21/552*** *(2014.01)*

(21) Application number: **17160350.9**

(22) Date of filing: **10.03.2017**

(54) **SUB THZ TO MID INFRARED TUNABLE SEMICONDUCTOR PLASMONICS**

AUF UNTER-THZ UND MITTEL-INFRAROT ABSTIMMBARE HALBLEITER-PLASMONIK

DISPOSITIF PLASMONIQUE À SEMI-CONDUCTEUR ACCORDABLE DEPUIS LE SOUS THZ À L'INFRAROUGE MOYEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2016 EP 16161267
25.04.2016 DE 102016206999**

(43) Date of publication of application:
**20.09.2017   Bulletin 2017/38**

(73) Proprietors:
  • **IHP GmbH - Innovations for High Performance
    Microelectronics / Leibniz-Institut für
    innovative Mikroelektronik
    15236 Frankfurt (Oder) (DE)**
  • **Universität Kassel
    34125 Kassel (DE)**

(72) Inventors:
  • **Guha, Subhajit
    15230 Frankfurt (Oder) (DE)**
  • **Schröder, Thomas
    12587 Berlin (DE)**
  • **Witzigmann, Bernd
    34131 Kassel (DE)**
  • **Capellini, Giovanni
    10405 Berlin (DE)**

(74) Representative: **Eisenführ Speiser
Patentanwälte Rechtsanwälte PartGmbB
Anna-Louisa-Karsch-Strasse 2
10178 Berlin (DE)**

(56) References cited:
  **KR-A- 20070 094 727       US-A1- 2005 270 538
  US-A1- 2010 316 078       US-A1- 2011 032 528
  US-A1- 2012 074 323       US-A1- 2014 224 989
  US-A1- 2015 369 735**

  • **YAO YU ET AL: "Broad electrical tuning of
    graphene-loaded optical antennas", CLEO: 2013,
    THE OPTICAL SOCIETY, 9 June 2013
    (2013-06-09), pages 1-2, XP032603268, DOI:
    10.1364/CLEO_QELS.2013.QTH1B.3 [retrieved
    on 2014-06-12]**
  • **Dietmar Knipp: "Photonics and Optical
    Communication", Course Number 300352,
    Spring 2007, 1 January 2007 (2007-01-01), pages
    1-26, XP055583035, Retrieved from the Internet:
    URL:http://www.faculty.jacobs-university.d
    e/dknipp/c320352/lectures/6%20Optical%20De
    tectors.pdf [retrieved on 2019-04-24]**

## Description

The present invention relates to a tunable plasmon resonator, a sensor device, to a sensor arrangement, and to a method for fabricating a tunable plasmon resonator.

In metals, free electrons with an equilibrium electron density exhibit collective longitudinal density oscillations referred to as plasmons having an eigenfrequency called the plasmon frequency. The presence of a boundary formed by a surface gives rise to a further mode of oscillation, namely surface waves forming surface plasmons. Surface plasmons thus are collective oscillations of free electrons at the surface.

Surface plasmons at an interface of a metal with a dielectric can couple with a propagating electromagnetic field (photons) giving rise to surface-plasmon polaritons. These surface-plasmon polaritons propagate along the surface. Thus, interaction of light with electromagnetic waves in metal structures gives rise to electromagnetic fields arising from surface plasmon polaritons. The strength of the electromagnetic field associated with a surface-plasmon polariton decreases exponentially with increasing distance from the surface, both inside and outside the metal. Since surface plasmon polaritons propagate along the boundary of the metal and an external dielectric medium, they are sensitive to any change of the boundary, such as the adsorption of molecules on the conducting surface.

Metal plasmonic structures have been explored for application in waveguides, sensors, and modulators. Due to enhanced field strength, which is a typical property of surface plasmon polaritons, surface-plasmon-based biosensors for sensing of biomolecules promise an extremely high sensitivity, which is suitable for detection of even a single biomolecule arranged in proximity to the surface. Therefore, surface-plasmon-based biosensors seem ideally suited for lab-on-chip applications.

Due to the plasmon frequencies in metals, the operating frequency of known metal plasmonic structures is in the visible spectral range. The decay length governing the decrease of the field strength of the electromagnetic field of the surface plasmon polaritons in a dielectric fluid volume above the metal surface (herein called the sensing volume) is of the order of nanometers, thus, aiding in near field sensing of biomolecules up to the order of nanometers.

In order to be able to identify and distinguish between different biomolecules, spectroscopic measurements are often necessary, requiring an availability of surface-plasmon polaritons covering a frequency spectrum of interest. Tuning the plasmon frequency of the plasmons, however, is extremely difficult in known metallic structures. Hence, establishing a spectroscopy platform using plasmonic structures remains an open task.

US 2012/0074323 A1 describes a THz frequency range antenna which comprises a semiconductor film having a surface adapted to exhibit surface plasmons in the THz frequency range. The surface of the semiconductor film is structured with an antenna structure arranged to support localized surface plasmon resonances in the THz frequency range.

US 2014/0224989 A1 describes optical devices that include one or more structures fabricated from polar-dielectric materials that exhibit surface phonon polaritons (SPhPs), where the SPhPs alter the optical properties of the structure. The optical properties lent to these structures by the SPhPs are altered by introducing charge carriers directly into the structures. The carriers can be introduced into these structures, and the carrier concentration thereby controlled, through optical pumping or the application of an appropriate electrical bias.

US 2015/0369735 A1 discloses techniques for forming nanoribbon or bulk graphene-based surface plasmon resonance sensors.

In US 2011/0032528 A1 an integrated shear-vertical surface acoustic wave and surface plasmon resonance sensing device and method are described. A device and method for detecting a feature of a fluid or a target element in the fluid by contacting the fluid to a sensing surface on a substrate are described. A mechanical wave comprising shear-vertical wave components is propagated through the substrate to mix the fluid, conduct desorption of at least one non-target element from the sensing surface, and/or impede adsorption of the non-target element to the sensing surface. The feature of the fluid or the target element in the fluid is then detected on the sensing surface.

The document Dietmar Knipp: "Photonics and Optical Communication", Course Number 300352, Spring 2007, 1 January 2007, pages 1-26, (EPO NPL reference number XP055583035) describes an operating principle of photodiodes having p-n or p-i-n structures.

In US 2012/0074323 A1 a THz frequency range antenna is described. The THz frequency antenna comprises a semiconductor film having a surface adapted to exhibit surface plasmons in the THz frequency range. The surface of the semiconductor film is structured with an antenna structure arranged to support localized surface plasmon resonances in the THz frequency range.

According to a first aspect of the present invention, a tunable plasmon resonator according to claim 1 is provided.

The tunable plasmon resonator comprises the features according to claim 1.

The tunable plasmon resonator of the first aspect of the present invention is based on a semiconductor structure having free charge carriers in a plasmon resonance layer. The plasmon resonator is not based on exciting surface plasmons as in metals, but on a larger volume of plasma resonance in the plasmon resonance layer. As is known per se, the plasmon frequency in a semiconductor is dependent on the concentration of free charge carriers within the semiconductor and on the effective mass of the charge carriers. This is expressed in the Drude-Lorentz relation

$$\omega_p^2 = \frac{Nq^2}{\varepsilon_0 m}$$

wherein $\omega_p$ is the plasmon frequency, N is a charge carrier density, q is the elementary charge, so is the vacuum permittivity constant, and m the effective mass of the free charge carriers. The concentration of free charge carriers can be influenced by doping during fabrication on one hand, but on the other hand also by injection of free charge carriers under operation of the tunable plasmon resonator, which means under application of a suitable tuning control voltage via the tuning device. Furthermore, the effective mass of the free charge carriers can be influenced by material selection during fabrication on one hand, but on the other hand also by subjecting the lattice of the semiconductor plasmon resonance layer to mechanical stress, which may be a compressive or tensile stress. Application of stress influences the effective mass of the free charge carriers in the semiconductor plasmon resonance layer. Therefore, both mentioned measures, influencing the density of free charge carriers and influencing the effective mass of the free charge carriers in the plasmon resonance layer, can be used to tune the plasmon frequency in the plasmon resonance layer. The measures can be applied in combination or in the alternative.

Due to the typical free charge carrier densities and effective masses in semiconductor materials, the tunable semiconductor plasmon resonator is suitable for operation in the sub-terahertz to mid infrared spectral range of the electromagnetic spectrum. The suggested tunable semiconductor plasmon resonator thus forms a key to obtaining information about absorption and vibrational properties of large molecules such as biomolecules, which information can be obtained exactly in the sub-terahertz to mid infrared spectral range.

An advantage of the semiconductor plasmon resonator of the present invention is that it also allows a tuning of the resonator's quality factor. Due to the larger field penetration in semiconductor materials, this is achieved only in semiconductor plasmonics and not in metal plasmonics. This makes the volume of the semiconductor significant which plays the role of tuning the quality factor of the device. In metals, this being a surface phenomenon, volume of the device plays no role in it and hence such a quality factor tuning is not possible.

Furthermore, examples of the tunable plasmon resonator of the invention can be based on materials and structures that are compatible with standard semiconductor fabrication processes, such as CMOS or BiCMOS. This reduces the cost of manufacturing, especially for lab-on-chip designs containing a large number of semiconductor plasmon resonator structures according to the present invention.

There are different possibilities of tuning the plasmon frequency that can be used in the alternative or in combination with each other.

The present invention considers actively controlling and thus tuning the concentration of free charge carriers in the plasmon resonance layer. According to the first aspect of the present invention, this measure is implemented by the features of claim 1.

Further embodiments make use of the possibility of the tunable plasmon resonator of the present invention of tuning the effective mass of the free charge carriers in the plasmon resonance layer.

In embodiments according to the first aspect of the invention, the tuning device comprises a piezoelectric stressor layer configured and arranged to be deformed piezoelectrically and to thus exert stress on a crystal lattice of the plasmon resonance layer with a stress amount depending on a strain control voltage applied to the piezoelectric stressor via at least one strain control electrode, thus modifying a lattice strain amount present in the plasmon resonance layer and in turn changing an effective mass of the free charge carriers in the plasmon resonance layer. Preferably, the stressor layer is arranged between the carrier substrate and the plasmon resonance layer.

In another embodiment that makes use of varying effective masses of the free charge carriers for varying the plasmon frequency, the plasmon resonance layer has different material compositions in different lateral sections. The different material compositions are associated with different effective mass amounts of the free charge carriers in the respective lateral section. In this embodiment, the different lateral sections give rise to resonance at different plasmon frequencies. The resonance layer as a whole can therefore respond to different incoming frequencies.

Thus, the tunable plasmon resonator of the present invention makes use of a combination of the mentioned different possibilities of tuning the plasmon frequency in that

- the plasmon resonance layer is a semiconductor layer of intrinsic conductivity,

- the tuning device comprises a first tuning layer formed by a first doped semiconductor layer of a first conductivity type and a second tuning layer formed by a second doped semiconductor layer of a second conductivity type opposite to the first conductivity type, each of the first and second tuning layers being connected with a respective one of a first and second tuning control electrode,

- the plasmon resonance layer is arranged between the first and second tuning layers, thus allowing an injection of free charge carriers into the plasmon resonance layer in a density amount that depends on an injection control voltage applied via the first and second tuning control electrodes, and wherein

- the tuning device further comprises a piezoelectric third tuning layer configured and arranged to be deformed piezoelectrically and to thus exert tensile stress on the plasmon resonance layer with a stress amount depending on a strain control voltage applied to the tuning layer via at least one strain control electrode, thus modifying a lattice strain amount present in the plasmon resonance layer and in turn changing an effective mass of the free charge carriers in the plasmon resonance layer.

The structure of the tunable plasmon resonator preferably has the plasmon resonance layer comprising two layer segments. Front faces of the two layer segments face each other and form field enhancement regions. The sensing volume is formed by a gap between the front faces. The field enhancement is achieved by providing the two front faces as open facets. In one advantageous variant of this embodiment, the two layer segments, when seen in a top view, each have the shape of a wedge and together are arranged to form a bow - tie - shaped configuration. In a preferred implementation of this variant, the tip wedge segment length corresponds to half a resonance wavelength, a tip facet width is about a tenth of the wavelength, and a distance of the tip facets from each other is about a fraction of the wavelength.

For a given geometry of the resonator, the resonance frequency is varied by the properties of the charge carriers (carrier density and the effective mass). This is also true for the case where for a given charge carrier property the geometry of the resonator defines the resonance frequency and can be subsequently tuned by altering the geometry of the resonator.

In embodiments of the present invention, the plasmon resonator is a geometric resonator that allows altering the carrier properties to obtain tunability of the resonance frequency. The resonance frequency of the given resonator can be varied by altering the density of free charge carriers (suitably electrons), wherein the achievable frequency range can be influenced by doping during fabrication of the plasmon resonator. Another way to alter the resonance frequency is changing the effective mass of the free charge carriers. This can be influenced by varying lattice stress in the plasmon resonator.

In one embodiment, the carrier substrate has an opening that exposes a bottom surface section of the plasmon resonance layer on a second substrate side opposite to a first substrate side comprising the plasmon resonance region.

The carrier substrate is preferably made of silicon. Suitably silicon (100) is used as the carrier substrate. Other semiconductor materials can be used for the carrier substrate, depending on the active material used in the resonance layer.

According to a second aspect of the present invention a sensor device is provided. The sensor device comprises at least one tunable plasmon resonator according to an embodiment of the first aspect to of the invention. The sensor device further comprises a sensor chamber enclosing a sensing volume to be filled with a dielectric fluid under test for a detection of particles in the dielectric fluid under test. The dielectric fluid can be a liquid or gaseous dielectric medium.

In order to prove the performance of the sensor device, a preferred embodiment comprises a plurality of pointed nanostructures extending from a bottom of the sensor chamber into the sensing volume.

According to a third aspect of the present invention, a sensor arrangement is provided. The sensor arrangement comprises

- a sensor device according to the second aspect of the invention or one of its embodiments,

- a tunable emitter arranged and configured to provide electromagnetic radiation in a sub-terahertz to mid-infrared frequency range incident on the exposed plasmon resonance region of the sensor device; and

- a detector arranged and configured to detect electromagnetic radiation in the THz to infrared frequency range provided by the emitter and either reflected or transmitted by the plasmon resonance region of the sensor device

The sensor arrangement of the third aspect of the invention shares the advantages of the previous aspects of the invention. It is suitable for use in the sub-terahertz to mid infrared spectral range of the electromagnetic spectrum and preferably used in the terahertz frequency range.

The term sub-terahertz is used to denote frequencies in the range between 0.3 and less than 1 THz. The mid infrared frequency region covers frequencies of up to 100 THz, whereas in some embodiments a maximum frequency is at about 40 THz.

A fourth aspect of the present invention is formed by a method according to claim 10, for fabricating a tunable surface - plasmon resonator for operation at frequency in an infrared frequency range.

The method comprises the steps according to claim 10.

In the following, further embodiments will be described with reference to the attached drawings. In the drawings:

Fig. 1 is a schematic cross sectional view of a first example of tunable semiconductor plasmon resonator structure;

Fig. 2 is a schematic illustration of a second example of a tunable semiconductor plasmon resonator structure;

Fig. 3 is a schematic cross sectional view of a first embodiment of a tunable semiconductor plasmon resonator structure;

Fig. 4 is a schematic cross sectional view of a third example of a tunable semiconductor plasmon resonator structure; and

Fig. 5 is a schematic cross sectional view of a sensor device based on a tunable semiconductor plasmon resonator structure.

Fig. 6 is a flow diagram of a fabrication process 600 for making a tunable plasmon resonator for operation at frequencies in an infrared frequency range.

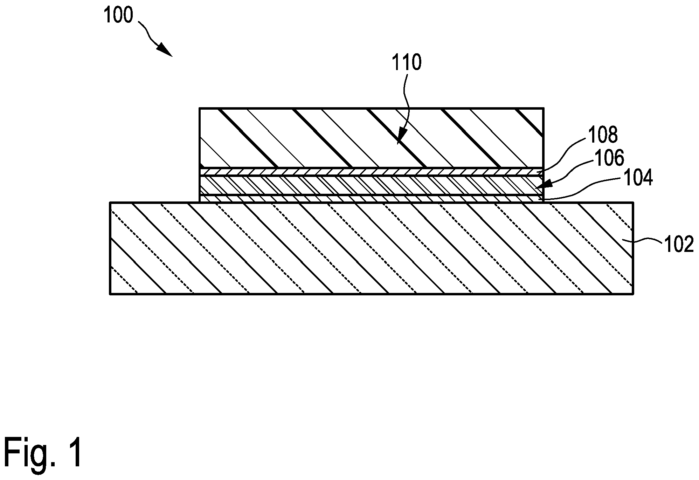

Fig. 1 is a schematic cross sectional view of a not claimed example of a tunable semiconductor plasmon resonator structure 100. The illustration of the plasmon resonator structure 100 is schematic and simplified in that only the layers that are of importance for explaining the general device structure are shown.

The plasmon resonator structure 100 comprises a bottom layer 102, which forms a carrier substrate. The bottom layer 102 may for instance be made of silicon, suitably silicon (100), or silicon dioxide. A first contact layer 104 is arranged on the bottom layer 102, followed in a stacking direction by a piezoelectric stressor layer 106, and a second contact layer 108. The first and second contact layers 104 and 108 are made of a metal. They are connectable with an external tuning control device (not shown), from which they can receive a strain control voltage.

On the second contact layer 108, a plasmon resonance layer 110 is arranged. The plasmon resonance layer is made of a semiconductor material. Suitable semiconductor materials for the plasmon resonance layer are group-IV semiconductors such as silicon, germanium, or a silicon germanium alloy, a III-V semiconductor material, or graphene. The semiconductor material of the plasmon resonance layer 110 is doped and has a certain volume density N of free charge carriers. This carrier density N is suitably in a range between $1 \times 10^{17}$ cm$^{-3}$ and $5 \times 10^{20}$ cm$^{-3}$.

While generally the free charge carriers can be either electrons or holes, the present nonlimiting example makes use of free electrons. The plasmon resonance layer 110 is in direct contact with the underlying stack comprising the piezoelectric stressor layer 106 embedded between the contact layers 104 and 108.

The layer stack of the piezoelectric stressor layer 106 embedded between the contact layers 104 and 108 forms an integrated tuning device that is configured and arranged to exert stress on the crystal lattice of the plasmon resonance layer 110 with a stress amount depending on the strain control voltage applied to the piezoelectric stressor layer 106 via the contact layers 104 and 108. By piezoelectric deformation of the piezoelectric stressor layer 106, a lattice strain amount present in the plasmon resonance layer 110 is induced, in turn an effective mass of the free charge carriers in the plasmon resonance layer 110 is changed. The change of the effective mass of the free charge carriers - determines the plasmon frequency of the plasma of free charge carriers in the plasmon resonance layer according to the Drude-Lorentz relation given above.

In operation of the semiconductor plasmon resonator 100, therefore, the piezoelectric stressor layer 106 is used as a tuning layer to tune the resonance frequency of the resonator to a desired value by tuning the effective mass of the carriers. Plasmon polaritons in the plasmon resonance layer 110 can be excited by impinging electromagnetic radiation of a corresponding frequency provided by an external source of radiation. The resonance excitation of the plasmon polaritons allows exposing a sensing volume arranged adjacent to the plasmon resonance layer and filled with a dielectric fluid containing particles under test to an enhanced field strength, which is a typical property of plasmon polaritons. Particles under test showing a characteristic frequency response within a spectral tuning interval of the plasmon resonance frequency can thus be detected and identified with high sensitivity. This high sensitivity is of particular advantage in the field of bio sensing applications, where it reaches the sensitivity level of detecting even a single biomolecule.

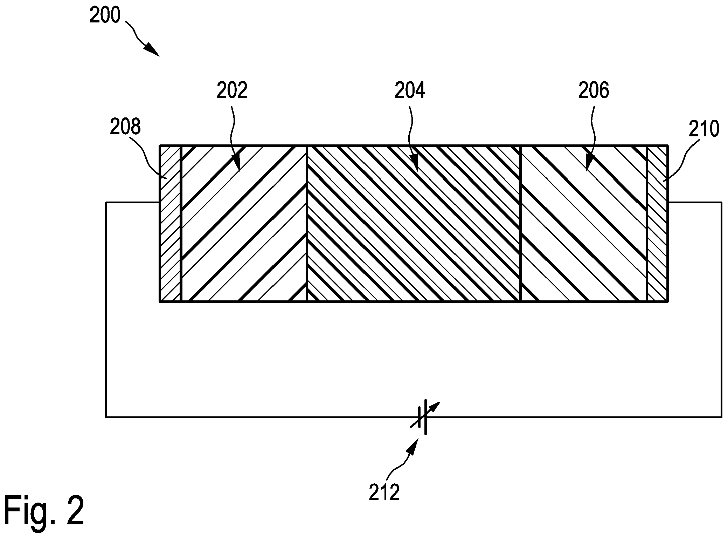

Fig. 2 is a schematic illustration of a second example of a tunable semiconductor plasmon resonator structure 200, which is not claimed here. The tunable semiconductor plasmon resonator structure 200 of Fig. 2 forms a lateral p-i-n junction with a p-doped semiconductor layer 202, an intrinsic semiconductor layer 204 and an n-doped semiconductor layer 206. In this embodiment, the plasmon resonance layer is formed by the semiconductor layer 204 of intrinsic conductivity, and the integrated tuning device is formed by the p-doped semiconductor layer 202 as a first tuning layer and the n-doped semiconductor layer 206 as a second tuning layer. The tuning layers are connected with respective first and second tuning control electrodes 208 and 210. Thus, the intrinsic semiconductor layer 204 that forms the plasmon resonance layer is laterally embedded between the first and second tuning layers to form a p-i-n structure. This allows controlling concentration of free charge carriers in the intrinsic semiconductor layer 204 in a charge-carrier density amount that depends on a control voltage provided by a tunable voltage source 212 via the first and second tuning control electrodes 208 and 210.

The control voltage is in one variant of this embodiment applied in reverse bias. This allows controlling the density of free charge carriers in the intrinsic semiconductor layer 204 by increasing or decreasing depletion width, wherein the initial (V=0) doping concentration amounts of the p-doped semiconductor layer 202 and of the n-doped semiconductor layer 206 provide for the maximum density of free charge carriers in the intrinsic semiconductor layer 204, and thus the maximum of the tunable plasmon frequency range.

In another variant of this example, the control voltage is applied in forward bias. This allows increasing the density of free charge carriers in the intrinsic semiconductor layer 204 with increasing amount of the control voltage.

In both variants, the controllable variation of the charge-carrier density amount in the intrinsic semiconductor layer 204 that forms the plasmon resonance layer corresponds with a controllable variation of the plasmon resonance frequency.

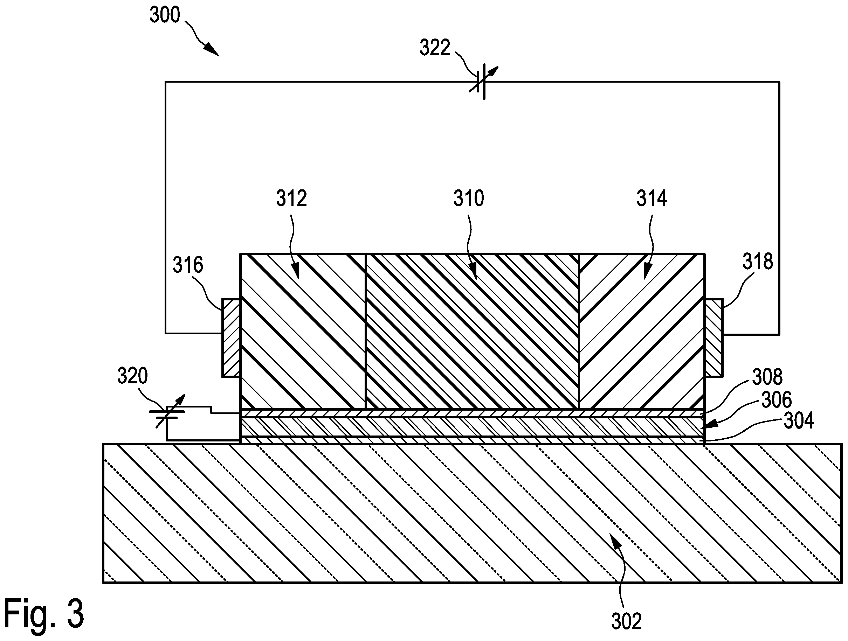

Fig. 3 is a schematic cross sectional view of a first embodiment of a tunable semiconductor plasmon resonator structure 300.

As with Figs. 1 and 2, the illustration of the plasmon resonator structure 300 is schematic and simplified in that only the layers that are of importance for explaining the general device structure are shown.

The plasmon resonator structure 300 is essentially a combination of the embodiments of Figs. 1 and 2. It comprises a bottom layer 302, a first contact layer 304, a piezoelectric stressor layer 306, and a second contact layer 308. The first and second contact layers 104 and 108 are connectable with an external tuning control device 320, from which they can receive a strain control voltage.

On the second contact layer 308, a plasmon resonance layer 310 is arranged. The plasmon resonance layer 310 is made of an intrinsic semiconductor material. The plasmon resonance layer 310 is in direct contact with the underlying stack comprising the piezoelectric stressor layer 306 embedded between the contact layers 304 and 308.

The plasmon resonance layer 310 forms a part of a lateral p-i-n junction with a p-doped semiconductor layer 312, the intrinsic semiconductor layer forming the plasmon resonance layer 310 and an n-doped semiconductor layer 314.

The p-doped semiconductor layer 312 thus forms a first tuning layer and the n-doped semiconductor layer 314 forms a second tuning layer. The tuning layers are connected with respective first and second tuning control electrodes 316 and 318. Thus, the intrinsic semiconductor layer that forms the plasmon resonance 310 layer is laterally embedded between the first and second tuning layers to form a p-i-n structure.

The semiconductor plasmon resonator 300 thus allows two forms of control of the plasmon frequency, which may be applied individually or in combination with each other to achieve a desired plasmon frequency. The layer stack of the piezoelectric stressor layer 306 embedded between the contact layers 304 and 308 forms a first integrated tuning device that is configured and arranged to exert stress on the crystal lattice of the plasmon resonance layer 310 with a stress amount depending on the strain control voltage applied to the piezoelectric stressor layer 306 via the contact layers 304 and 308. By piezoelectric deformation of the piezoelectric stressor layer 306, a lattice strain amount present in the plasmon resonance layer 310 is modified, in turn an effective mass of the free charge carriers in the plasmon resonance layer 110 is changed. The change of the effective mass of the free charge carriers influences the plasmon frequency of the plasma of free charge carriers in the plasmon resonance layer according to the Drude-Lorentz relation given above. A second integrated tuning device is formed by the p-doped semiconductor layer 312 and the n-doped semiconductor layer 314. This allows controlling concentration of free charge carriers in the intrinsic semiconductor layer forming the plasmon resonance layer 310 in a charge-carrier density amount that depends on a control voltage provided by a tunable voltage source 322 via the first and second tuning control electrodes 316 and 318. The charge carrier concentration and the effective mass can thus be tuned in a way such that they shift the plasmon frequency in the same direction. This may involve changing the polarity of the voltage bias for the piezoelectric stressor.

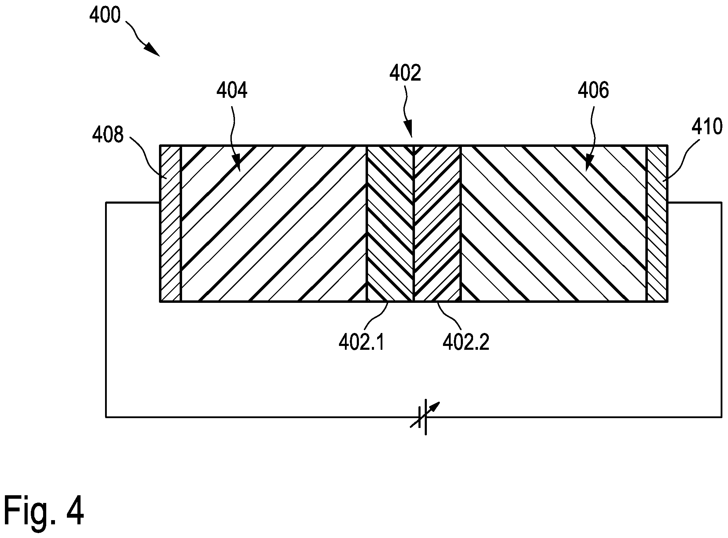

Fig. 4 is a schematic cross sectional view of a third example of a tunable semiconductor plasmon resonator structure 400, which is not claimed here. A plasmon resonance layer 402 is embedded laterally in a lateral p-n junction with a p-doped semiconductor layer 404, and an n-doped semiconductor layer 406. The plasmon resonance layer 402 is made of two different semiconductor layers 402.1 and 402.2 which differ in their material and thus effective mass.

The present example shows the plasmon resonance layer with two different layers. However, any number of layers can be used to achieve a desired variety of materials in the plasmon resonance layer and thus a desired range of effective masses. Varying the stoichiometry of binary, ternary or quaternary alloys of III-V semiconductors, or of group IV semiconductors render orders of magnitude variation in the effective mass, which may additionally be influenced by suitable doping during fabrication.

The p-doped semiconductor layer 404 forms a first tuning layer and the n-doped semiconductor layer 406 forms a second tuning layer. The tuning layers are connected with respective first and second tuning control electrodes 408 and 410.

One way of tuning the plasmon frequency is selecting a desired sub-layer 402.1 or 402.2 for THz interaction, by operating the PN junction in depletion mode with a suitable bias voltage in reverse bias condition of the PN junction and of an amount achieving depletion of the non-selected layer while maintaining a desired concentration of free charge carriers in the selected layer. The bias voltage thus controls a position and width of the depletion region and in turn the cross section of the plasmonic area as seen by the electromagnetic radiation.

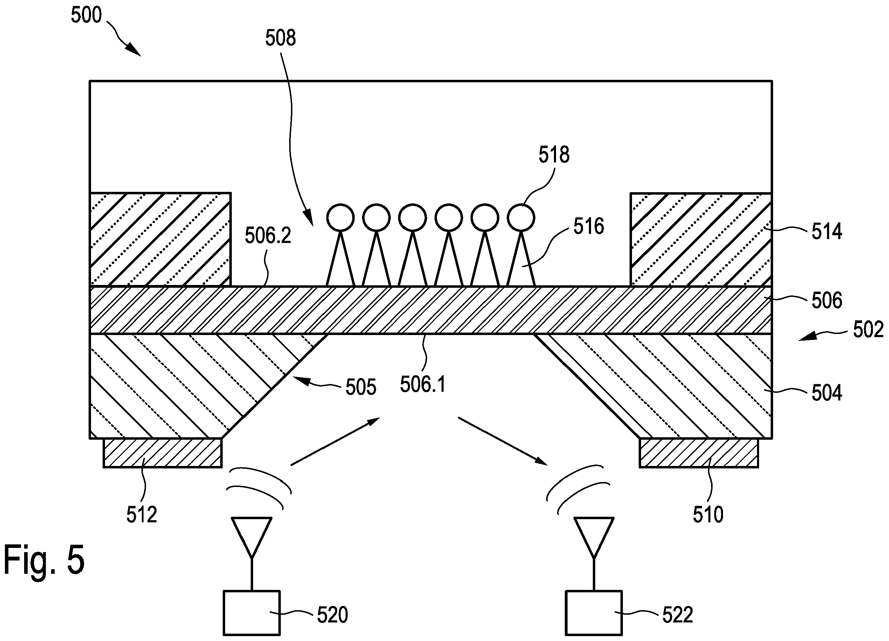

Fig. 5 is a schematic cross sectional view of a sensor device 500 based on a tunable semiconductor plasmon resonator structure. Fig. 5 is also a schematic representation of an embodiment of a sensor arrangement.

The sensor device 500 comprises at least one tunable plasmon resonator 502 according to one of the embodiments described herein. For commercial applications embodiments of sensor devices are made as lab-on-chip arrangements with a large number of individual sensor devices identical to the sensor device 500 shown in Fig. 5.

It is noted that details of the structural implementation of the tunable plasmon resonator 502 are not shown in Fig. 5. The tunable plasmon resonator 502 is represented graphically by a plasmon resonance layer 506 on a carrier substrate 504. The carrier substrate 504 is processed on its backside to have a recess 505 that exposes a back surface 506.1 of the plasmon resonance layer on its backside and underneath a sensor chamber 508.

The sensor chamber 508 forms a limited sensing volume that is to be filled with a dielectric fluid containing particles to be detected and identified by a THz spectroscopic method.

Side walls 514 near the bottom of the sensor chamber 508 are for instance made of silicon dioxide.

A bottom of the sensor chamber 508 is formed by an upper surface 506.2 of the plasmon resonance layer 506. Small tip-like structures 516 having a vertical extension of less than 1 micrometer are provided on the upper surface 506.2 of the plasmon resonance layer 506 to help catching particles such as biomolecules 518 to be detected and identified by the sensor device 500. This way, the particles are concentrated in the THz / IR near field "hot spot" area to achieve highest sensitivity also in case of ultra-diluted molecules to probe.

The carrier substrate 504 is provided with contact layers 510 and 512 on its bottom side. The contact layers 510 and 512 are used to apply a tuning control voltage to an integrated tuning device (not shown) and thus the plasmon frequency in the plasmon resonance layer 506.

In operation, an external source 520 of electromagnetic radiation in the THz to mid infrared spectral range provides resonance excitation of plasmon polaritons at a desired plasmon frequency controlled by suitable a tuning applied to tuning device setting the plasmon resonance frequency of the plasmon resonance layer 506. Due to an enhanced field strength of the plasmon polaritons near the upper surface 506.1 of the plasmon resonance layer, the particles 518 are exposed to a particularly high field strength, and an electromagnetic radiation containing a frequency response by particles 518 is detected by a detector 522 and recorded for spectral analysis.

The sensor device 500 forms a platform that can be fabricated with standard CMOS/BiCMOS processes, which reduces the manufacturing cost of such sensor platform considerably.

The sub THz to mid infrared region operation of doped semiconductor plasmonic structures corresponds to operating wavelengths in the micrometer range. This matches the dimension of biological materials (molecules and cells) that can be sensed in this frequency range.

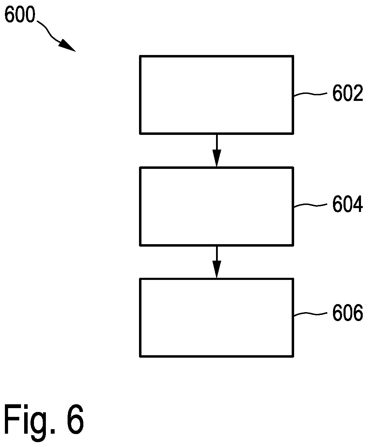

Fig. 6 is a flow diagram of a fabrication process 600 for making a tunable plasmon resonator for operation at frequencies in an infrared frequency range.

The method comprises the following steps. In a step 602 a plasmon resonance layer made of a crystalline semiconductor material is fabricated on a carrier substrate. In a step 604, a plasmon resonance region of the plasmon resonance layer is exposed to a sensing volume to be filled with a dielectric fluid. Further, in a step 606 an integrated tuning device is fabricated. It is monolithically integrated into the plasmon resonator. The order of steps 602 to 606 can be modified according to the specifics of a desired fabrication embodiment. Standard CMOS/BiCMOS processes can be used for fabrication, which reduces the manufacturing cost of such a resonator for forming a sensor platform considerably.

## Claims

1.  A tunable plasmon resonator (300), comprising

    - a plasmon resonance layer (310) made of graphene, a crystalline group-IV-semiconductor material or a crystalline group-III-V semiconductor material, and arranged on a carrier substrate (302), the plasmon resonance layer (310) having a plasmon resonance region that is exposed to a sensing volume
    - a tuning device that is integrated into the plasmon resonator (300) and arranged and configured
    - to modify a density of free charge carriers in the plasmon resonance region of the resonance layer, and
    - to thus set a plasmon frequency of plasmon polaritons in the plasmon resonance region to a desired plasmon frequency value within a plasmon frequency tuning interval, for resonance excitation of plasmon polaritons by incident electromagnetic waves of a frequency corresponding to the set plasmon frequency value,

    wherein

    - the plasmon resonance layer (310) is a semiconductor layer of intrinsic conductivity,
    - the tuning device comprises a first tuning layer (312) formed by a first doped semiconductor layer of a first conductivity type and a second tuning layer (314) formed by a second doped semiconductor layer of a second conductivity type opposite to the first conductivity type, each of the first and second tuning layers being connected with a respective first (316) or second (318) tuning control electrode, and in that
    - the plasmon resonance layer (310) is arranged between the first (312) and second (314) tuning layers to form a p-i-n structure, thus allowing an injection of free charge carriers into the plasmon resonance layer (310) in a density amount that depends on an injection control voltage applied via the first (316) and second (318) tuning control electrodes,

**characterized in that**
the tuning device further comprises a piezoelectric third tuning layer (306) configured and arranged to be deformed piezoelectrically and to thus exert tensile stress on the plasmon resonance layer (310) with a stress amount depending on a strain control voltage applied to the tuning layer via at least one strain control electrode, thus modifying a lattice strain amount present in the plasmon resonance layer (310) and in turn changing an effective mass of the free charge carriers in the plasmon resonance layer (310).

2. The tunable plasmon resonator (300) of claim 1, wherein the plasmon resonance layer (402) has different material compositions in different lateral sections, the different material compositions being associated with different effective mass amounts of the free charge carriers in the respective different lateral sections.

3. The tunable plasmon resonator of claim 1 or 2, wherein the stressor layer is arranged between the carrier substrate (302) and the plasmon resonance layer (310).

4. The tunable plasmon resonator (300) of at least one of the preceding claims, wherein the plasmon resonance layer comprises two layer segments, front faces of the two layer segments facing each other and forming field enhancement regions, wherein the sensing volume is formed by a gap between the front faces.

5. The tunable plasmon resonator (300) of at least one of the preceding claims, wherein the carrier substrate (302) has an opening that exposes a bottom surface section of the plasmon resonance layer on a second substrate side opposite to a first substrate side comprising the plasmon resonance region.

6. The tunable plasmon resonator (300) of at least one of the preceding claims, wherein the carrier substrate (302) is made of silicon.

7. A sensor device (500) comprising at least one tunable plasmon resonator (300) according to at least one of the preceding claims, and a sensor chamber (508) enclosing a sensing volume to be filled with a dielectric fluid under test for a detection of particles in the dielectric fluid under test.

8. The sensor device (500) of claim 7, comprising a plurality of pointed nanostructures (516) extending from a bottom of the sensor chamber (500) into the sensing volume.

9. A sensor arrangement, comprising

   - a sensor device (500) according to claim 7 or 8
   - a tunable emitter (520) arranged and configured to provide electromagnetic radiation in an infrared frequency range incident on the exposed plasmon resonance region of the sensor device (500); and
   - a detector (522) arranged and configured to detect electromagnetic radiation in the infrared frequency range provided by the emitter (520) and either reflected or transmitted by the plasmon resonance region of the sensor device.

10. A method for fabricating a tunable plasmon resonator (300) for operation at frequencies in an infrared frequency range, the method comprising

   - fabricating a plasmon resonance layer (310) made of a crystalline semiconductor material on a carrier substrate (302),
   - exposing a plasmon resonance region of the plasmon resonance layer (310) to a sensing volume to be filled with a dielectric fluid;
   - fabricating a monolithically integrated tuning device that is arranged and configured
   - to modify a density of free charge carriers in the plasmon resonance region of the resonance layer by application of a control voltage to one or more tuning control electrodes of the tuning device, and
   - to thus set a plasmon frequency of plasmon polaritons in the plasmon resonance region to a desired plasmon frequency value within a plasmon frequency tuning interval, for resonance excitation of plasmon polaritons by incident electromagnetic waves of a frequency corresponding to the set plasmon frequency value,

   wherein

   - the plasmon resonance layer (310) is fabricated as a semiconductor layer of intrinsic conductivity,
   - fabricating the tuning device comprises fabricating a first tuning layer (312) formed by a first doped semiconductor layer of a first conductivity type and a second tuning layer (314) formed by a second doped semiconductor layer of a second conductivity type opposite to the first conductivity type, and connecting each of the first (316) and second (318) tuning layers with a respective first or second tuning control electrode, and in that

- the plasmon resonance layer (310) is arranged between the first (312) and second (314) tuning layers to form a p-i-n structure, thus allowing an injection of free charge carriers into the plasmon resonance layer (310) in a density amount that depends on an injection control voltage applied via the first (316) and second (318) tuning control electrodes,

**characterized in that**

- fabricating the tuning device further comprises fabricating a piezoelectric third tuning layer (306) configured and arranged to be deformed piezoelectrically and to thus exert tensile stress on the plasmon resonance layer (310) with a stress amount depending on a strain control voltage applied to the tuning layer via at least one strain control electrode, thus modifying a lattice strain amount present in the plasmon resonance layer (310) and in turn changing an effective mass of the free charge carriers in the plasmon resonance layer (310).

**Patentansprüche**

1. Ein durchstimmbarer Plasmonresonator (300), aufweisend:

- eine Plasmonresonanzsschicht (310) aus Graphen, einem kristallinen Gruppe-IV-Halbleitermaterial, oder einem kristallinen Gruppe-III-V-Halbleitermaterial, und angeordnet auf einem Trägersubstrat (302), wobei die Plasmonresonanzsschicht (310) eine Plasmonresonanzregion hat, die zu einem Messvolumen hin freiliegt;
- eine Durchstimmvorrichtung, die in dem Plasmonresonator (300) integriert sowie angeordnet und konfiguriert ist,

- eine Dichte freier Ladungsträger in der Plasmonresonanzregion der Resonanzschicht zu modifizieren, und
- so eine Plasmonfrequenz von Plasmon-Polaritonen in der Plasmonresonanzregion auf einen gewünschten Plasmonfrequenzwert innerhalb eines Plasmonfrequenz-Durchstimmintervalls einzustellen, zur Resonanzanregung von Plasmon-Polaritonen durch einfallende elektromagnetische Wellen einer Frequenz, die dem eingestellten Plasmonfrequenzwert entspricht,

wobei

- die Plasmonresonanzschicht (310) eine intrinsisch leitfähige Halbleiterschicht ist,
- die Durchstimmvorrichtung eine erste Durchstimmschicht (312) umfasst, die aus einer ersten dotierten Halbleiterschicht eines ersten Leitfähigkeitstyps gebildet ist, und eine zweite Durchstimmschicht (314), die aus einer zweiten dotierten Halbleiterschicht eines zweiten, dem ersten Leitfähigkeitstyp entgegengesetzten Leitfähigkeitstyps gebildet ist, wobei jeweils die erste und die zweite Durchstimmschicht mit einer ersten (316) oder zweiten (318) Durchstimm-Steuerelektrode verbunden ist, und wobei
- die Plasmonresonanzschicht (310) zwischen der ersten (312) und der zweiten (314) Durchstimmschicht angeordnet ist, um eine p-i-n Struktur zu bilden, um so eine Injektion von freien Ladungsträgern in die Plasmonresonanzschicht (310) mit einem Dichtebetrag zu ermöglichen, der von einer über die erste (316) und zweite (318) Durchstimm-Steuerelektrode angelegten Injektionssteuerspannung abhängt,

**dadurch gekennzeichnet, dass**
die Durchstimmvorrichtung weiterhin eine piezoelektrische dritte Durchstimmschicht (306) umfasst, die konfiguriert und angeordnet ist, piezoelektrisch verformt zu werden und damit tensilen Stress auf die Plasmonresonanzschicht (310) mit einem Stressbetrag auszuüben, der von einer Verformungssteuerspannung abhängt, die über mindestens eine Verformungssteuerelektrode an die Durchstimmschicht angelegt wird, wodurch ein in der Plasmonresonanzschicht (310) vorhandener Gitterverformungsbetrag modifiziert wird und damit wiederum eine effektive Masse der freien Ladungsträger in der Plasmonresonanzschicht (310) verändert wird.

2. Durchstimmbarer Plasmonresonator (300) nach Anspruch 1, wobei die Plasmonresonanzschicht (402) verschiedene Materialzusammensetzungen in verschiedenen lateralen Abschnitten hat, wobei die verschiedenen Materialzusammensetzungen mit verschiedenen Effektive-Masse-Beträgen der freien Ladungsträger in den jeweiligen verschiedenen lateralen Abschnitten assoziiert sind.

3. Durchstimmbarer Plasmonresonator nach Anspruch 1 oder 2, wobei die Stressor-Schicht zwischen dem Trägersubstrat (302) und der Plasmonresonanzschicht (310) angeordnet ist.

4. Durchstimmbarer Plasmonresonator (300) nach mindestens einem der vorherigen Ansprüche, wobei die Plasmaresonanzschicht zwei Schichtsegmente umfasst, deren Vorderseiten einander gegenüberliegen und Feldverstärkungsregionen bilden, wobei das Messvolumen durch eine Lücke zwischen den Vorderseiten gebildet wird.

5. Durchstimmbarer Plasmonresonator (300) nach mindestens einem der vorherigen Ansprüche, wobei das Trägersubstrat (302) eine Öffnung aufweist, die einen unteren Oberflächenabschnitt der Plasmonresonanzschicht auf einer zweiten Substratseite gegenüber einer ersten Substratseite freilegt, die den Plasmonresonanzregion umfasst.

6. Durchstimmbarer Plasmonresonator (300) nach mindestens einem der vorherigen Ansprüche, wobei das Trägersubstrat (302) aus Silizium ist.

7. Eine Sensorvorrichtung (500), umfassend mindestens einen durchstimmbaren Plasmonresonator (300) nach mindestens einem der vorherigen Ansprüche und eine Sensorkammer (508), die das mit einer zu prüfenden dielektrischen Flüssigkeit zum Nachweis von Partikeln in der zu prüfenden dielektrischen Flüssigkeit zu füllende Messvolumen einschließt.

8. Sensorvorrichtung (500) nach Anspruch 7, umfassend eine Vielzahl spitzer Nanostrukturen (516), die sich von einem Boden der Sensorkammer (500) in das Messvolumen hinein erstrecken.

9. Eine Sensoranordnung, umfassend

   - eine Sensorvorrichtung (500) nach Anspruch 7 oder 8
   - einen durchstimmbaren Emitter (520), der angeordnet und konfiguriert ist, auf die freigelegte Plasmonresonanzregion der Sensorvorrichtung (500) einfallende elektromagnetische Strahlung in einem infraroten Frequenzbereich bereitzustellen; und
   - einen Detektor (522), der angeordnet und konfiguriert ist, von der Plasmonresonanzregion der Sensorvorrichtung entweder reflektierte oder transmittierte elektromagnetische Strahlung in dem vom Emitter (520) bereitgestellten infraroten Frequenzbereich zu detektieren.

10. Ein Verfahren zum Herstellen eines durchstimmbaren Plasmonresonators (300) zum Betrieb bei Frequenzen in einem infraroten Frequenzbereich, umfassend:

   - Herstellen einer Plasmonresonanzschicht (310) aus einem kristallinen Halbleitermaterial auf einem Trägersubstrat (302),
   - Freilegen einer Plasmonresonanzregion der Plasmonresonanzschicht (310) zu einem Messvolumen hin, welches mit einer dielektrischen Flüssigkeit zu befüllen ist,

   - Herstellen einer monolithisch integrierten Durchstimmvorrichtung, die angeordnet und konfiguriert ist,
   - eine Dichte freier Ladungsträger in der Plasmonresonanzregion der Resonanzschicht durch Anlegen einer Steuerspannung an eine oder mehr Durchstimm-Steuerelektroden der Durchstimmvorrichtung zu modifizieren, und
   - so eine Plasmonfrequenz von Plasmon-Polaritonen in der Plasmonresonanzregion auf einen gewünschten Plasmonfrequenzwert innerhalb eines Plasmonfrequenz-Durchstimmintervalls einzustellen, zur Resonanzanregung von Plasmon-Polaritonen durch einfallende elektromagnetische Wellen einer Frequenz, die dem eingestellten Plasmonfrequenzwert entspricht,

wobei

   - die Plasmonresonanzschicht (310) eine intrinsisch leitfähige Halbleiterschicht ist,
   - das Herstellen der Durchstimmvorrichtung ein Herstellen einer ersten Durchstimmschicht (312) umfasst, die aus einer ersten dotierten Halbleiterschicht eines ersten Leitfähigkeitstyps gebildet ist, und ein Herstellen einer zweiten Durchstimmschicht (314), die aus einer zweiten dotierten Halbleiterschicht eines zweiten dem ersten Leitfähigkeitstyp entgegengesetzten Leitfähigkeitstyps gebildet ist, wobei jeweils die erste und die zweite Durchstimmschicht mit einer ersten (316) oder zweiten (318) Durchstimm-Steuerelektrode verbunden ist, und wobei
   - die Plasmonresonanzschicht (310) zwischen der ersten (312) und der zweiten (314) Durchstimmschicht angeordnet ist, um eine p-i-n Struktur zu bilden, um so eine Injektion von freien Ladungsträgern in die Plasmonresonanzschicht (310) mit einem Dichtebetrag zu ermöglichen, der von einer über die erste (316) und zweite (318) Durchstimm-Steuerelektrode angelegten Injektionssteuerspannung abhängt,

**dadurch gekennzeichnet, dass**
das Herstellen der Durchstimmvorrichtung weiterhin ein Herstellen einer piezoelektrischen dritten Durchstimmschicht (306) umfasst, die konfiguriert und angeordnet ist, piezoelektrisch verformt zu werden und damit tensilen Stress auf die Plasmonresonanzschicht (310) mit einem Stressbetrag auszuüben, der von einer Verformungssteuerspannung abhängt, die über mindestens eine Verformungssteuerelektrode an die Durchstimmschicht angelegt wird, wodurch ein in der Plasmonresonanzschicht (310) vorhandener Gitterverformungsbetrag modifiziert wird und damit wiederum eine effektive Masse der freien Ladungsträger in der Plasmonresonanzschicht (310) verändert wird.

## Revendications

1. Résonateur plasmonique accordable (300), comprenant

   - une couche de résonance plasmonique (310) composée de graphène, un matériau semi-conducteur cristallin du groupe IV ou un matériau semi-conducteur cristallin du groupe III-V, et disposée sur un substrat porteur (302), la couche de résonance plasmonique (310) ayant une zone de résonance plasmonique qui est exposée à un volume de détection,
   - un dispositif d'accordement qui est intégré au résonateur plasmonique (300) et disposé et configuré
   - pour modifier une densité de porteurs de charge libres dans la zone de résonance plasmonique de la couche de résonance, et
   - pour définir ainsi une fréquence plasmonique des polaritons plasmoniques dans la zone de résonance plasmonique sur une valeur de fréquence plasmonique souhaitée dans un intervalle d'accordement de fréquence plasmonique, pour l'excitation par résonance des polaritons plasmoniques par les ondes électromagnétiques incidentes d'une fréquence correspondant à la valeur de fréquence plasmonique définie,

   dans lequel

   - la couche de résonance plasmonique (310) est une couche de semi-conducteur à conductivité intrinsèque,
   - le dispositif d'accordement comprend une première couche d'accordement (312) formée par une première couche de semi-conducteur dopé d'un premier type de conductivité et une seconde couche d'accordement (314) formée par une seconde couche de semi-conducteur dopé d'un second type de conductivité opposé au premier type de conductivité, chacune de la première et de la seconde couches d'accordement étant reliée à une première (316) ou une seconde (318) électrode de contrôle d'accordement respective, et **caractérisé en ce que**
   - la couche de résonance plasmonique (310) est prévue entre la première (312) et la seconde (314) couches d'accordement afin de former une structure p-i-n, permettant ainsi une injection de porteurs de charge libres dans la couche de résonance plasmonique (310) selon une quantité de densité qui dépend d'une tension de commande d'injection appliquée via la première (316) et la seconde (318) électrodes de commande d'accordement,

   **caractérisé en ce que**
   le dispositif d'accordement comprend en outre une troisième couche d'accordement piézoélectrique (306) configurée et prévue pour être déformée de manière piézoélectrique et pour ainsi exercer une contrainte de traction sur la couche de résonance plasmonique (310) avec une quantité de contrainte qui dépend d'une tension de contrôle de déformation appliquée à la couche d'accordement via au moins une électrode de contrôle de déformation, modifiant ainsi une quantité de déformation de réseau présente dans la couche de résonance plasmonique (310), modifiant à son tour une masse effective des porteurs de charge libres dans la couche de résonance plasmonique (310).

2. Résonateur plasmonique accordable (300) selon la revendication 1, dans lequel la couche de résonance plasmonique (402) possède des compositions de matériau différentes dans différentes sections latérales, les compositions de matériau différentes étant associées à des quantités de masse effective différentes des porteurs de charge libres dans les sections latérales différentes respectives.

3. Résonateur plasmonique accordable selon la revendication 1 ou 2, dans lequel la couche de contrainte est prévue entre le substrat porteur (302) et la couche de résonance plasmonique (310).

4. Résonateur plasmonique accordable (300) selon au moins l'une des revendications précédentes, dans lequel la couche de résonance plasmonique comprend deux segments de couche, les faces avant des deux segments de couche se faisant face et formant des zones d'amélioration de champ, dans lequel le volume de détection est formé par un espace entre les faces avant.

5. Résonateur plasmonique accordable (300) selon au moins l'une des revendications précédentes, dans lequel le substrat porteur (302) possède une ouverture qui expose une section de surface inférieure de la couche de résonance plasmonique sur un second côté de substrat opposé à un premier côté de substrat comprenant la zone de résonance plasmonique.

6. Résonateur plasmonique accordable (300) selon au moins l'une des revendications précédentes, dans lequel le substrat porteur (302) est composé de silicium.

7. Dispositif formant capteur (500) comprenant au moins un résonateur plasmonique accordable (300) selon au moins l'une des revendications précédentes, et une chambre de dispositif formant capteur (508) qui contient un volume de détection destiné à être rempli avec un fluide diélectrique de test pour une détection de particules dans le fluide diélectrique de test.

8. Dispositif formant capteur (500) selon la revendication 7, comprenant une pluralité de nanostructures pointées (516) qui s'étendent depuis une partie inférieure de la chambre de dispositif formant capteur (500) dans le volume de détection.

9. Ensemble de dispositif formant capteur, comprenant

  - un dispositif formant capteur (500) selon la revendication 7 ou 8,
  - un émetteur accordable (520) prévu et configuré pour fournir un rayonnement électromagnétique sur une plage de fréquences infrarouges incident sur la zone de résonance plasmonique exposée du dispositif formant capteur (500) ; et
  - un détecteur (522) prévu et configuré pour détecter un rayonnement électromagnétique sur la plage de fréquences infrarouges fourni par l'émetteur (520) et réfléchi ou transmis par la zone de résonance plasmonique du dispositif formant capteur.

10. Procédé de fabrication d'un résonateur plasmonique accordable (300) destiné à fonctionner à des fréquences sur une plage de fréquences infrarouges, le procédé comprenant

  - la fabrication d'une couche de résonance plasmonique (310) composée d'un matériau semi-conducteur cristallin sur un substrat porteur (302),
  - l'exposition d'une zone de résonance plasmonique de la couche de résonance plasmonique (310) à un volume de détection à remplir avec un fluide diélectrique ;
  - la fabrication d'un dispositif d'accordement intégré de manière monolithique qui est prévu et configuré
  - pour modifier une densité de porteurs de charge libres dans la zone de résonance plasmonique de la couche de résonance par l'application d'une tension de commande à une ou plusieurs électrodes de commande d'accordement du dispositif d'accordement, et
  - pour définir ainsi une fréquence plasmonique des polaritons plasmoniques dans la zone de résonance plasmonique sur une valeur de fréquence plasmonique souhaitée dans un intervalle d'accordement de fréquence plasmonique, pour l'excitation par résonance des polaritons plasmoniques par les ondes électromagnétiques incidentes d'une fréquence correspondant à la valeur de fréquence plasmonique définie,

dans lequel

  - la couche de résonance plasmonique (310) est fabriquée comme une couche de semi-conducteur à conductivité intrinsèque,
  - la fabrication du dispositif d'accordement comprend la fabrication d'une première couche d'accordement (312) formée par une première couche de semi-conducteur dopé d'un premier type de conductivité et une seconde couche d'accordement (314) formée par une seconde couche de semi-conducteur dopé d'un second type de conductivité opposé au premier type de conductivité, et en reliant chacune de la première (316) et de la seconde (318) couches d'accordement à une première ou une seconde électrode de contrôle d'accordement respective, et **caractérisé en ce que**
  - la couche de résonance plasmonique (310) est prévue entre la première (312) et la seconde (314) couches d'accordement afin de former une structure p-i-n, permettant ainsi une injection de porteurs de charge libres dans la couche de résonance plasmonique (310) selon une quantité de densité qui dépend d'une tension de commande d'injection appliquée via la première (316) et la seconde (318) électrodes de commande d'accordement,

**caractérisé en ce que**

  - la fabrication du dispositif d'accordement comprend en outre la fabrication d'une troisième couche d'accordement piézoélectrique (306) configurée et prévue pour être déformée de manière piézoélectrique et pour ainsi exercer une contrainte de traction sur la couche de résonance plasmonique (310) avec une quantité de contrainte qui dépend d'une tension de contrôle de déformation appliquée à la couche d'accordement via au moins une électrode de contrôle de déformation, modifiant ainsi une quantité de déformation de réseau présente dans la couche de résonance plasmonique (310), modifiant à son tour une masse effective des porteurs de charge libres dans la couche de résonance plasmonique (310).

Fig. 1

EP 3 220 133 B1

Fig. 2

Fig. 3

EP 3 220 133 B1

EP 3 220 133 B1

Fig. 4

Fig. 5

EP 3 220 133 B1

600

602

604

606

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120074323 A1
- US 20140224989 A1
- US 20150369735 A1
- US 20110032528 A1

**Non-patent literature cited in the description**

- **DIETMAR KNIPP.** Photonics and Optical Communication. Spring, 01 January 2007, 1-26